# EUROPÄISCHE PATENTANMELDUNG

(11) **EP 0 665 045 A1**
(43) Veröffentlichungstag der Anmeldung: **02.08.1995**
(21) Anmeldenummer: 94120523.9
(22) Anmeldetag: 23.12.1994
(51) Int. Cl.: B01D 21/24, B65G 33/26

(54) **Förderschnecke, insbesondere für Sedimentations-oder Kläreinrichtungen**

(30) Priorität: 22.01.1994 DE 4401840
(71) Anmelder: Voith Sulzer Stoffaufbereitung GmbH, 88191 Ravensburg (DE)
(72) Erfinder: Schwarz, Michael, D-89522 Heidenheim (DE); Pfeifhofer, Helmut, Baulkham Hills NSW2153 Sydney (AU)
(74) Vertreter: Weitzel, Wolfgang, Dr.-Ing. Patentanwalt

(57) **Zusammenfassung**

Die Erfindung betrifft eine Förderschnecke in Form einer selbsttragenden, tragachslosen Wendel, deren Fläche sich im wesentlichen radial erstreckt, insbesondere für Sedimentations- oder Kläranlagen zur Reinigung von Suspensionen.

Die Erfindung ist gekennzeichnet durch eine zweite Wendel, deren Fläche bzw. Erzeugende sich in Förderrichtung bzw. zwischen 0 und höchstens 40°, vorzugsweise zwischen 0 und 20° von der Richtung der Zentralachse abweichend erstreckt mit einer Länge - je Ganghöhe - zwischen 20 und 40 % der Ganghöhe.

## Beschreibung

Die Erfindung betrifft eine Förderschnecke entsprechend dem Oberbegriff des Patentanspruchs 1. Eine solche Förderschnecke ist bekannt aus der DE-A 40 00 150. Diese Förderschnecke ist aber nicht achslos, sondern hat anscheinend eine Welle, über welche die Wendel von einem Motor aus angetrieben wird.

Bei Kläreinrichtungen oder Sedimentationseinrichtungen für Fasersuspensionen, die vorzugsweise von Altpapier herstammen, besteht die Gefahr von Ansätzen von Verspinnungen an der Wendel durch entsprechend lange Verunreinigungen, wie Bänder, Schnüre, usw.

Die Aufgabe der Erfindung ist es, die Produktionsleistung einer solchen Einrichtung wesentlich zu erhöhen, wenn als Förderschnecke eine tragachslose Wendel benutzt wird. Eine solche Schnecke hat eine relativ große lichte Weite im Zentralbereich, um einen einwandfreien Transport über lange Betriebszeiten zu gewährleisten.

Die Aufgabe wird erfindungsgemäß durch die Merkmale des kennzeichnenden Teils des Patentanspruchs 1 gelöst.

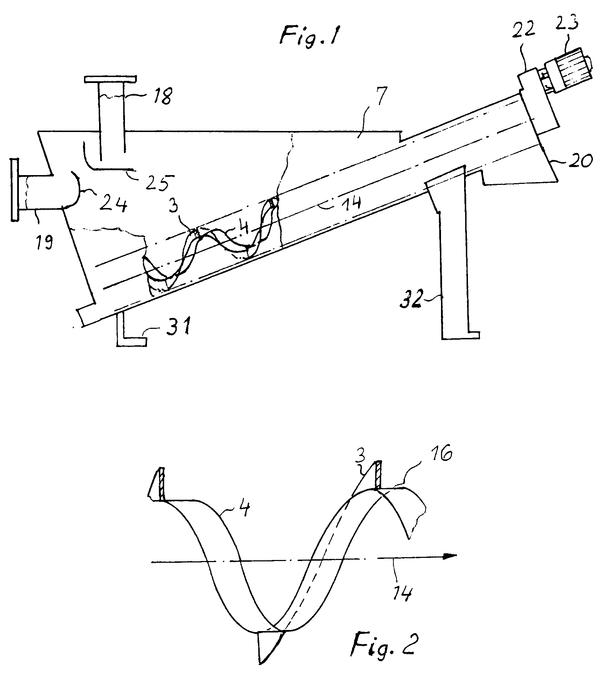

Nachfolgend wird die Erfindung anhand den Figuren der Zeichnungen erläutert, wobei Figur 1 eine Ansicht, teils im Schnitt und Figur 2 eine Vergrößerung der erfindungsgemäßen Förderschnecke im Ausschnitt zeigen.

Die Sedimentationseinrichtung hat einen im Querschnitt etwa dreieckigen Behälter 7 mit einem Zufuhrstutzen 18 und einem Abfuhrstutzen 19 für gereinigtes Wasser. Es sind Leitbleche 24 und 25 vorgesehen, um eine bestimmte Strömung im Behälter zu erzeugen. Am Boden des Behälters 7 befindet sich eine Transportschnecke in Form einer tragachslosen Wendel 3, die etwa 20° aufwärts gerichtet ist. Sie wird angetrieben von einem Motor 23 über ein Getriebe 22. Am Ende der Förderschnecke ist ein Abfuhrschacht 20 vorgesehen. Die ganze Einrichtung wird gehalten von Stützen 31 und 32. Die tragachslose Wendel 3 wird nun ergänzt durch eine zweite Wendel 4, die am inneren Rand der ersten Förderwendel 3 angebracht ist, und sich von dieser inneren Kante aus in Förderrichtung 14 erstreckt, wobei hier diese Richtung leichtfertig auch mit der Zentralachse der Wendeln zusammenfällt. Die Wendeln bestehen aus einfachen Blechteilen und sind im allgemeinen miteinander verschweißt. Daher auch die Ausbildung in der Art, daß die Erzeugende 16 der zweiten Wendel praktisch parallel zur Förderrichtung oder Zentralachse 14 der Wendeln verläuft. Man verwendet nämlich als Ausgangsmaterial einen ebenen Blechstreifen.

Es ist durchaus auch möglich, daß die Erzeugende der zweiten Wendel 4 eine gewisse Neigung zur Zentralachse 14 hat (etwa bis 30°), jedoch ist die Herstellung einer solchen Wendel unvertretbar teuer, da die nötigen Ausgangsmaterialien als Blech nicht vorhanden und nur unter großem Kostenaufwand herstellbar sind. Die zentrale lichte Weite der Förderwendel beträgt im allgemeinen zwischen 20 und 70 % des Außendurchmessers der ersten Wendel 3 (der Wendel mit dem größeren Durchmesser). Man erreicht mit der angegebenen Ausführung bereits eine Steigerung des Durchsatzes der Förderschnecke und damit des gesamten Sedimentationsbehälters auf fast das Doppelte als für den Fall, wenn nur die Wendel 3 mit dem größeren Durchmesser vorhanden wäre.

## Patentansprüche

1. Förderschnecke in Form einer selbsttragenden, tragachslosen Wendel, deren Fläche sich im wesentlichen radial erstreckt, insbesondere für Sedimentations- oder Kläranlagen zur Reinigung von Suspensionen, gekennzeichnet durch eine zweite Wendel (4), deren Fläche sich zwischen 0 und höchstens 40°, von der Richtung der Zentralachse abweichend erstreckt mit einer Länge zwischen 20 und 40 % der Ganghöhe.

2. Förderschnecke nach Anspruch 1, dadurch gekennzeichnet, daß die zweite Wendel (4) von einem Blechstreifen gebildet und aus einem ebenen Ausgangsmaterial gewickelt ist.

3. Förderschnecke nach Anspruch 1 oder 2, dadurch gekennzeichnet, daß die zweite Wendel (4) an den inneren Rand der ersten Wendel (3) angebracht ist und sich dort beginnend in Förderrichtung erstreckt.

4. Förderschnecke nach einem der Ansprüche 1-3, dadurch gekennzeichnet, daß dieselbe am Boden eines Sedimentations- oder Klärbehälters angebracht ist und gegen die Horizontale zwischen 15 und 50° nach oben gerichtet ist.

5. Förderschnecke nach einem der Ansprüche 1 bis 4, dadurch gekennzeichnet, daß die Fläche der zweiten Wendel sich zwischen 0 und 20° abweichend von der Richtung der Zentralachse erstreckt.
